# EUROPÄISCHE PATENTSCHRIFT

(11) **EP 2 952 320 B1**
(45) Veröffentlichungstag und Bekanntmachung des Hinweises auf die Patenterteilung: **09.11.2016**
(21) Anmeldenummer: 15164643.7
(22) Anmeldetag: 22.04.2015
(51) Int. Cl.: B29C 45/14

(54) **KUNSTSTOFF UMSPRITZTES STANZGITTER MIT HAFTMATERIAL**
LEAD FRAME ENCAPSULATED WITH PLASTIC WITH ADHESIVE MATERIAL
GRILLAGE ENROBÉ DE PLASTIQUE COMPRENANT UN MATÉRIAU D'ADHESIF

(30) Priorität: 03.06.2014 DE 102014210480
(43) Veröffentlichungstag der Anmeldung: 09.12.2015
(73) Patentinhaber: ROBERT BOSCH GMBH, 70442 Stuttgart (DE)
(72) Erfinder: Bauer, Rico, 74629 Windischenbach (DE); Fischer, Marc, 73262 Reichenbach (DE); Weiss, Markus, 73760 Ostfildern (DE)

(56) Entgegenhaltungen:
- EP-A2- 2 211 396
- DE-A1-102004 053 782
- DE-A1-102006 050 144
- DE-A1-102009 029 265
- DE-A1-102009 053 512

## Beschreibung

### Gebiet der Erfindung

Die Erfindung betrifft ein Stanzgitterkomposit und ein Verfahren zum Herstellen eines Kunststoff umspritzten Stanzgitters.

### Hintergrund der Erfindung

Steuergeräte im Motorraum eines Fahrzeugs sind häufig einer beanspruchenden Umgebung ausgesetzt, in der hohe Temperaturschwankungen, hohe mechanische Belastungen (etwa durch Vibrationen) und auch aggressive Stoffe (wie etwa Getriebeöl) vorhanden sein können.

Um beispielsweise ein Kupfer-Stanzgitter eines Getriebesteuergeräts vor Getriebeöl (das chemisch aggressiv ist) und vor Spänen (die elektrische Kurzschlüsse verursachen können) zu schützen, wird das Stanzgitter häufig mit Kunststoff umspritzt.

Jedoch kann das Stanzgitter prozessbedingt häufig nicht in einem Arbeitsvorgang umspritzt werden und es kann eine Grenzfläche zwischen dem zu unterschiedlichen Zeiten gespritzten Kunststoffmaterial entstehen, da keine stoffschlüssige Verbindung dazwischen entsteht. Auf diese Weise kann Getriebeöl über diese Grenzfläche, aber auch über nicht-umspritzte Anschlusskontakte des Stanzgitters, mit dem Kupfer in Kontakt kommen, wodurch es zu schädigenden chemischen Reaktionen kommen kann.

Die EP 2 211 396 offenbart ein mit Kunststoff umspritztes Stanzgitter, das mit einem Haftmittler im Bereich der Umspritzung versehen wurde.

### Zusammenfassung der Erfindung

Es ist Aufgabe der Erfindung, den Verschleiß eines Steuergeräts für den Motorraum eines Fahrzeugs zu senken. Weiter kann mit der Erfindung die Abdichtung eines Kunststoff umspritzten Stanzgitters gegen eindringendes Getriebeöl erhöht werden.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Stanzgitterkomposit, wie es beispielsweise in einem Steuergerät, etwa einem Getriebesteuergerät, für ein Fahrzeug eingesetzt werden kann. Ein Stanzgitter basiert in der Regel auf einer Metallplatte, aus der Bereiche ausgestanzt werden, so dass Leiterbahnen analog einer Leiterplatte entstehen.

Gemäß einer Ausführungsform der Erfindung umfasst das Stanzgitterkomposit ein Stanzgitter aus Metall, eine Umspritzung des Stanzgitters aus Kunststoff und ein Haftmaterial in einem Grenzbereich, in den Stoffe aus der Umgebung zwischen die Umspritzung und das Stanzgitter eindringen könnten. Das Haftmaterial dient dabei zur Erhöhung der Haftung zwischen dem Metall des Stanzgitters und dem Kunststoff der Umspritzung. Auf diese Weise kann die Dichtheit an dem Grenzbereich bzw. der Grenzfläche zwischen dem Kunststoff und dem Stanzgitter gegen eindringendes Getriebeöl erhöht werden. Auch kann die Bildung elektrischer Kurzschlüsse zwischen einzelnen Stanzgitterbahnen vermieden werden.

Im Gegensatz zu einem Haftvermittler, der lediglich die chemischen Eigenschaften des Kunststoffs verändert, bleibt das Haftmaterial im Stanzgitterkomposit vorhanden und dient als mechanischer Vermittler zwischen dem Metallmaterial des Stanzgitters und dem Kunststoff. Mit anderen Worten können im Grenzbereich drei Schichten unterschieden werden: eine Metallschicht, eine Haftmaterialschicht und eine Kunststoffschicht. Außerhalb des Grenzbereichs sind lediglich die Metallschicht und die Kunststoffschicht vorhanden.

Gemäß einer Ausführungsform der Erfindung ist das Haftmaterial in einem Grenzbereich zwischen einer Umspritzung und einem nicht-umspritzten Bereich angeordnet. Ein solcher Grenzbereich entsteht beispielsweise bei einem Anschlusskontakt des Stanzgitterkomposits, der aus der Umspritzung herausragt.

Gemäß einer Ausführungsform der Erfindung ist das Haftmaterial in einem Grenzbereich angeordnet, an dem zwei Umspritzungen aneinanderstoßen, die voneinander getrennt am Stanzgitter angebracht worden sind. Solche Grenzbereiche können zwischen Kunststoffbereichen (auch aus dem gleichen Material) entstehen, die zu unterschiedlichen Zeiten um das Stanzgitter gespritzt wurden.

Gemäß einer Ausführungsform der Erfindung umfasst das Haftmaterial eine Vergussmasse und/oder einen Klebstoff, beispielsweise mit einer epoxidbasierten Komponente und/oder einem Polymermaterial. Derartige Haftmaterialien können einerseits thermisch ausgehärtet werden und sind deshalb besonders beständig. Anderseits vermitteln diese Materialien eine gute Haftung zu Metall und zu anderen Kunststoffen, wie etwa Polyimid, das als Kunststoffmaterial der Umspritzung dienen kann.

Gemäß einer Ausführungsform der Erfindung umfasst das Haftmaterial Partikel in einer Matrix. Mit anderen Worten kann das Haftmaterial ein gefülltes Haftmaterial sein, das eine Matrix (d.h. ein aushärtbares Basismaterial) gemischt mit Partikeln, Plättchen, usw. beispielsweise aus Siliziumdioxid oder anderem Werkstoff umfasst.

Gemäß einer Ausführungsform der Erfindung wurde eine Oberfläche des Stanzgitters unter dem Haftmaterial strukturiert. Beispielsweise kann eine Oberfläche des Stanzgitters vor dem Aufbringen des Haftmaterials künstlich vergrößert werden, um die Haftung des Haftmaterials zu erhöhen.

Gemäß einer Ausführungsform der Erfindung ist das Metall des Stanzgitters mit einer weiteren Metallschicht beschichtet. Das Stanzgitter kann beispielsweise auf einer Kupferplatte basieren, die vernickelt wurde.

Ein weiterer Aspekt der Erfindung betrifft ein Verfahren zum Herstellen eines Kunststoff umspritzten Stanzgitters, so wie es beispielsweise obenstehend und untenstehend beschrieben ist. Es ist zu verstehen, dass Merkmale des Verfahrens, so wie obenstehend und untenstehend beschrieben, auch Merkmale der Vorrichtung sein können und umgekehrt.

Gemäß einer Ausführungsform der Erfindung umfasst das Verfahren: Bereitstellen eines Stanzgitters aus Metall, Anbringen eines Haftmaterials an dem Stanzgitter, Umspritzen des Stanzgitters mit Kunststoff, so dass das Haftmaterial in einem Grenzbereich, in dem Stoffe aus der Umgebung zwischen die Umspritzung und das Stanzgitter eindringen könnten, zwischen dem Metall des Stanzgitters und dem Kunststoff der Umspritzung angeordnet ist.

Ein (beispielsweise verzinntes) Stanzgitter wird beispielsweise an den Stellen (d.h. Grenzbereichen), an denen (a) im Produkt die Kupferanschlüsse aus der Kunststoffumspritzung austreten und (b) an den Stellen, an denen Grenzflächen aufgrund einer Mehrfachumspritzung mit Kunststoff entstehen, mit dem Haftmaterial umhüllt. Danach folgt ein Kunststoff-Umspritzungsprozess. Die Haftung zwischen dem Haftmaterial und dem Stanzgitter sowie zwischen dem Haftmaterial und der Kunststoffumspritzung ist besser als die der Kunststoffumspritzung auf dem Stanzgitter.

Vor dem Umspritzen kann das Haftmaterial beispielsweise thermisch (mittels Bestrahlen mit Infrarotlicht, in einem Ofen) oder auch mittels UV-Licht ausgehärtet werden.

Gemäß einer Ausführungsform der Erfindung umfasst das Verfahren weiter: Aktivieren einer Metalloberfläche des Stanzgitters vor dem Anbringen des Haftmaterials. Zusätzlich kann für eine bessere Haftung zwischen dem Haftmaterial und dem Stanzgitter die Oberfläche des Stanzgitters aktiviert werden, beispielsweise mittels Plasmaaktivierung. Auf diese Weise können beispielsweise Oxide entfernt werden. Auch ist es möglich, die Oberfläche des Stanzgitters vorzustrukturieren, beispielsweise mittels Laserstrukturierung.

### Kurze Beschreibung der Figuren

Im Folgenden werden Ausführungsbeispiele der Erfindung mit Bezug auf die beiliegenden Figuren detailliert beschrieben.
Fig. 1 zeigt schematisch einen Grenzbereich eines Stanzgitters.
Fig. 2 zeigt schematisch einen weiteren Grenzbereich eines Stanzgitters.
Fig. 3 zeigt schematisch einen Querschnitt durch ein Stanzgitter gemäß einer Ausführungsform der Erfindung.
Fig. 4 zeigt schematisch einen Querschnitt durch ein Stanzgitter gemäß einer weiteren Ausführungsform der Erfindung.
Fig. 5 zeigt schematisch einen Querschnitt durch ein Stanzgitter gemäß einer Ausführungsform der Erfindung.
Fig. 6 zeigt schematisch einen Querschnitt durch ein Stanzgitter gemäß einer weiteren Ausführungsform der Erfindung.

Grundsätzlich sind identische oder ähnliche Teile mit den gleichen Bezugszeichen versehen.

### Detaillierte Beschreibung von Ausführungsbeispielen

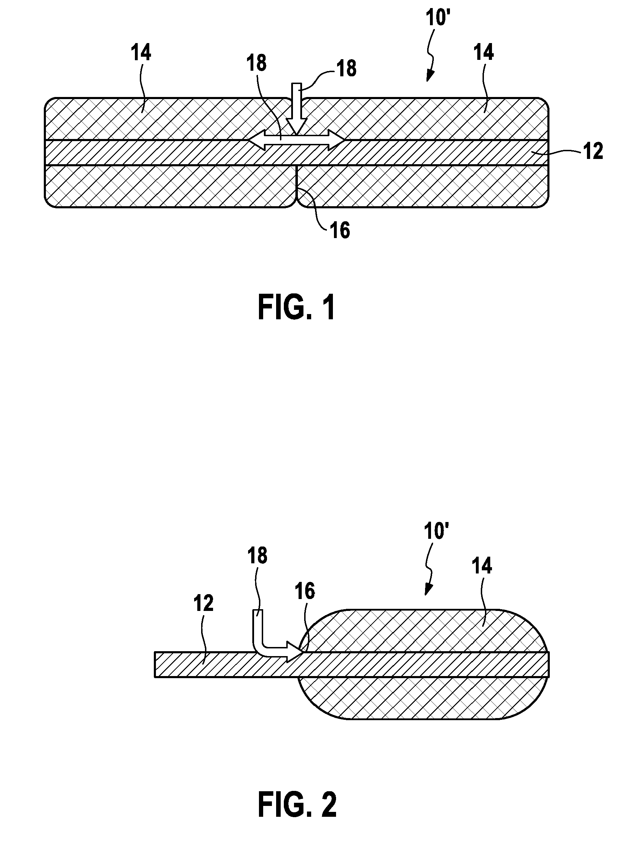

Fig. 1 zeigt ein Stanzgitterkomposit 10', das ein metallisches Stanzgitter 12 und zwei aneinanderstoßende Umspritzungen 14 umfasst. Die Umspritzungen 14 wurden zu unterschiedlichen Zeiten um das Stanzgitter 12 gespritzt, so dass sich ein Grenzbereich (bzw. eine Grenzfläche) 16 gebildet hat, der einen Eindringpfad 18, wie durch die Pfeile dargestellt, für umgebende Medien, wie etwa Getriebeöl, darstellen kann.

Fig. 2 zeigt ein weiteres Stanzgitterkomposit 10', das einen Grenzbereich 16 zwischen einem umspritzten Bereich und einem freiliegenden Bereich des Stanzgitters 12 aufweist. Beispielsweise kann ein elektrischer Kontakt aus der Umspritzung 14 herausragen. Auch hier wird ein Eindringpfad 18 für umgebende Medien gebildet.

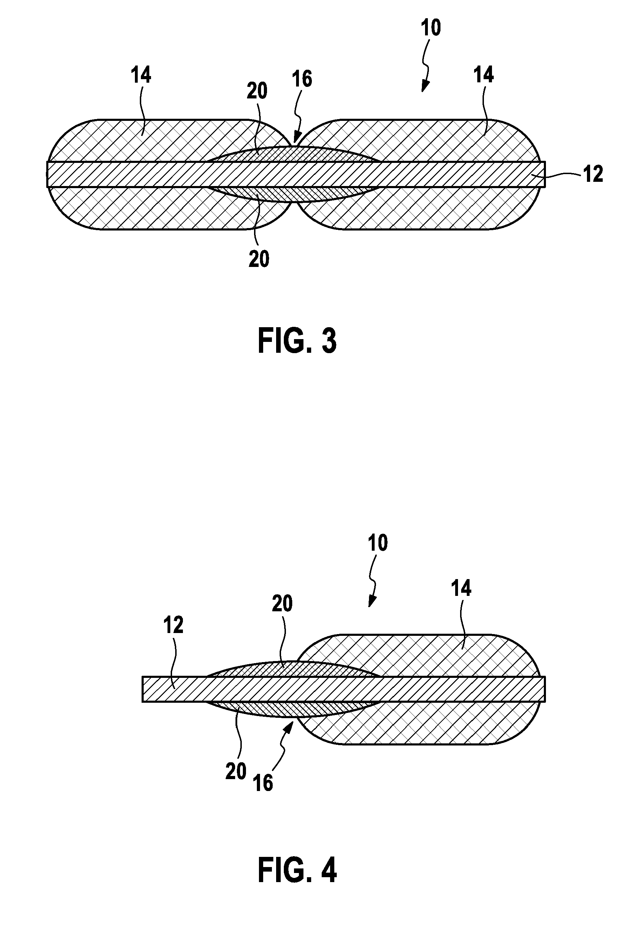

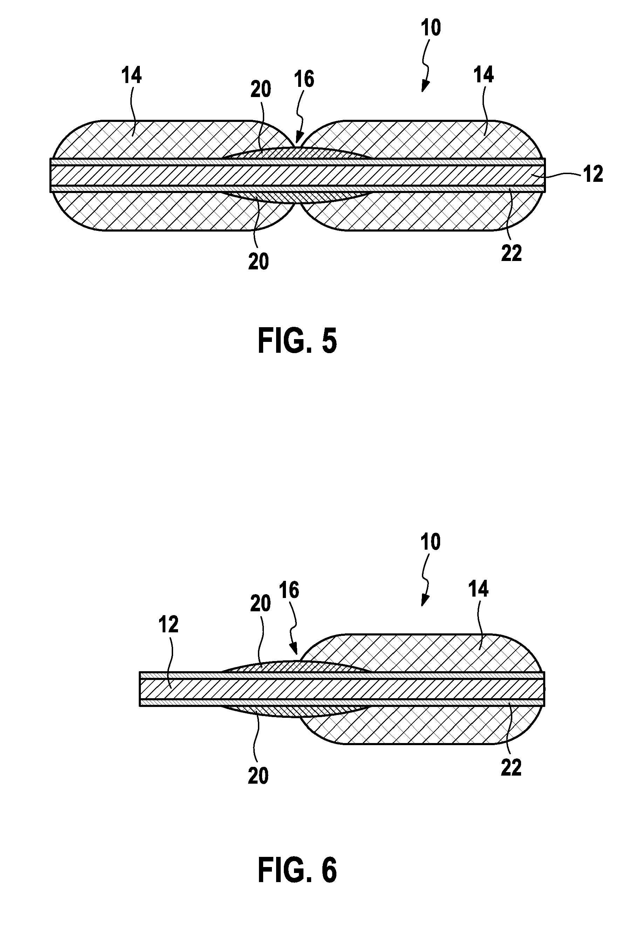

Fig. 3 und 4 zeigen Stanzgitterkomposite 10 analog den Fig. 1 und 2, bei denen ein Haftmaterial 20 das Eindringen von Medien verhindert bzw. zumindest erschwert. Das Stanzgitter 12 kann beispielsweise aus Kupfer gefertigt sein. Die Fig. 5 und 6 sind analog den Fig. 3 und 4, bei denen das Stanzgitter 12 (beispielsweise aus Kupfer) mit einer Nickelschicht 22 überzogen ist.

Das Stanzgitterkomposit 10 kann folgendermaßen hergestellt werden: In einem ersten Schritt wird das Stanzgitter 12 (eventuell vernickelt) bereitgestellt. Vor dem Umspritzen kann die Oberfläche des Stanzgitters 12 im Grenzbereich 16 vorstrukturiert und/oder aktiviert werden.

Danach wird das Stanzgitter 12 im Grenzbereich 16 mit einem noch nicht ausgehärteten Haftmaterial 20 versehen. Das Haftmaterial kann beispielsweise ein gefülltes Polymermaterial sein, das Partikel in einer Kunststoffmatrix umfasst. Anschließend wird das Haftmaterial 20 ausgehärtet, beispielsweise in einem Ofen.

Nach dem Aushärten wird das Stanzgitter 12 einmal oder mehrmals mit einem Kunststoff umspritzt, der beispielsweise auf Polyimid basieren kann. Die Bereiche mit Haftmaterial 20 wurden dabei so gewählt, dass an Übergangsbereichen zwischen zwei Umspritzungen 14 oder zwischen einer Umspritzung 14 und einem nicht-umspritzten Bereich Haftmaterial zwischen dem Metall des Stanzgitters 12 und dem Kunststoff der Umspritzung 14 vorhanden ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Stanzgitterkomposit (10), umfassend:
ein Stanzgitter (12) aus Metall,
eine Umspritzung (14) des Stanzgitters (12) aus Kunststoff,
ein Haftmaterial (20) zwischen dem Stanzgitter (12) und der Umspritzung (14) in einem Grenzbereich (16), in den Stoffe aus der Umgebung zwischen die Umspritzung (14) und das Stanzgitter (12) eindringen könnten, zur Erhöhung der Haftung zwischen dem Metall des Stanzgitters (12) und dem Kunststoff der Umspritzung (14),
**dadurch gekennzeichnet, dass** das Haftmaterial (20) Partikel in einer Matrix umfasst.

2. Stanzgitterkomposit (10) nach Anspruch 1,
wobei das Haftmaterial (20) in einem Grenzbereich (16) zwischen einer Umspritzung (14) und einem nicht-umspritzten Bereich angeordnet ist.

3. Stanzgitterkomposit (10) nach Anspruch 1 oder 2,
wobei das Haftmaterial (20) in einem Grenzbereich (16) angeordnet ist, an dem zwei Umspritzungen (14) aneinanderstoßen, die voneinander getrennt am Stanzgitter (12) angebracht worden sind.

4. Stanzgitterkomposit (10) nach einem der vorhergehenden Ansprüche,
wobei das Haftmaterial (20) eine Vergussmasse und/oder einen Klebstoff umfasst; und/oder
wobei das Haftmaterial (20) eine epoxidbasierte Komponente umfasst.

5. Stanzgitterkomposit (10) nach einem der vorhergehenden Ansprüche,
wobei das Haftmaterial (20) thermisch aushärtbar ist.

6. Stanzgitterkomposit (10) nach einem der vorhergehenden Ansprüche,
wobei eine Oberfläche des Stanzgitters (12) unter dem Haftmaterial strukturiert wurde.

7. Stanzgitterkomposit (10) nach einem der vorhergehenden Ansprüche, wobei das Metall des Stanzgitters (12) mit einer weiteren Metallschicht (22) beschichtet ist.

8. Verfahren zum Herstellen eines kunststoffumspritzten Stanzgitters (12), das Verfahren umfassend:
Bereitstellen eines Stanzgitters (12) aus Metall;
Anbringen eines Haftmaterials (20) an dem Stanzgitter (12), wobei das Haftmaterial (20) Partikel in einer Matrix umfasst;
Umspritzen des Stanzgitters (12) mit Kunststoffmaterial, so dass das Haftmaterial (20) in einem Grenzbereich (16), in den Stoffe aus der Umgebung zwischen eine Umspritzung (14) und das Stanzgitter (12) eindringen könnten, zwischen dem Metall des Stanzgitters (12) und dem Kunststoff der Umspritzung (14) angeordnet ist.

9. Verfahren nach Anspruch 8, weiter umfassend:
Aktivieren einer Metalloberfläche des Stanzgitters (12) vor dem Anbringen des Haftmaterials (20).

## Claims

1. Lead frame composite (10), comprising:
a lead frame (12) made of metal,
an encapsulation (14) of the lead frame (12) made of plastic,
a bonding material (20) between the lead frame (12) and the encapsulation (14) in a boundary region (16), into which substances from the surroundings could penetrate between the encapsulation (14) and the lead frame (12), to increase the adhesive bond between the metal of the lead frame (12) and the plastic of the encapsulation (14),
**characterized in that** the bonding material (20) comprises particles in a matrix.

2. Lead frame composite (10) according to Claim 1,
wherein the bonding material (20) is arranged in a boundary region (16) between an encapsulation (14) and a non-encapsulated region.

3. Lead frame composite (10) according to Claim 1 or 2,
wherein the bonding material (20) is arranged in a boundary region (16) at which two encapsulations (14) that have been applied to the lead frame (12) separately from one another abut one another.

4. Lead frame composite (10) according to one of the preceding claims,
wherein the bonding material (20) comprises a potting compound and/or an adhesive; and/or
wherein the bonding material (20) comprises an epoxy-based component.

5. Lead frame composite (10) according to one of the preceding claims,
wherein the bonding material (20) is thermally curable.

6. Lead frame composite (10) according to one of the preceding claims,
wherein a surface of the lead frame (12) under the bonding material has been structured.

7. Lead frame composite (10) according to one of the preceding claims,
wherein the metal of the lead frame (12) is coated with a further metal layer (22).

8. Method for producing a plastic-encapsulated lead frame (12), the method comprising:
providing a lead frame (12) made of metal;
applying a bonding material (20) to the lead frame (12), wherein the bonding material (20) comprises particles in a matrix;
encapsulating the lead frame (12) with plastics material, so that the bonding material (20) is arranged in a boundary region (16), into which substances from the surroundings could penetrate between an encapsulation (14) and the lead frame (12), between the metal of the lead frame (12) and the plastic of the encapsulation (14).

9. Method according to Claim 8, further comprising:
activating a metal surface of the lead frame (12) before the application of the bonding material (20).

## Revendications

1. Composite (10) pour grille de connexion, comprenant :
une grille de connexion (12) en métal,
un enrobage (14) de la grille de connexion (12), en un matériau plastique,
un matériau adhésif (20) entre la grille de connexion (12) et l'enrobage (14) dans une zone limite (16) dans laquelle des substances provenant du milieu ambiant peuvent pénétrer entre l'enrobage (14) et la grille de connexion (12), pour augmenter l'adhérence entre le métal de la grille de connexion (12) et le matériau plastique de l'enrobage (14),
**caractérisé en ce que** le matériau adhésif (20) comprend des particules dans une matrice.

2. Composite (10) pour grille de connexion selon la revendication 1, dans lequel le matériau adhésif (20) est disposé dans une zone limite (16) entre un enrobage (14) et une zone non-enrobée.

3. Composite (10) pour grille de connexion selon la revendication 1 ou 2, dans lequel le matériau adhésif (20) est disposé dans une zone limite (16) sur laquelle deux enrobages (14) sont adjacents, qui sont appliqués séparément l'un de l'autre sur la grille de connexion (12).

4. Composite (10) pour grille de connexion selon l'une des revendications précédentes, dans lequel le matériau adhésif (20) comprend une masse de remplissage et/ou un adhésif ; et/ou dans lequel le matériau adhésif (20) comprend un composant à base d'époxyde.

5. Composite (10) pour grille de connexion selon l'une des revendications précédentes, dans lequel le matériau adhésif (20) peut subir un durcissement thermique.

6. Composite (10) pour grille de connexion selon l'une des revendications précédentes, dans lequel une surface de la grille de connexion (12) en-dessous du matériau adhésif a été structurée.

7. Composite (10) pour grille de connexion selon l'une des revendications précédentes, dans lequel le métal de la grille de connexion (12) est revêtu d'une couche métallique supplémentaire (22).

8. Procédé de fabrication d'une grille de connexion (12) enrobée d'un matériau plastique, le procédé comprenant :
la mise à disposition d'une grille de connexion (12) en métal ;
l'application d'un matériau adhésif (20) sur la grille de connexion (12), le matériau adhésif (20) comprenant des particules dans une matrice ;
l'enrobage de la grille de connexion (12) avec un matériau plastique de telle sorte que le matériau adhésif (20) soit disposé, dans une zone limite (16) dans laquelle des substances provenant du milieu ambiant peuvent pénétrer entre un enrobage (14) et la grille de connexion (12), entre le métal de la grille de connexion (12) et le matériau plastique de l'enrobage (14).

9. Procédé selon la revendication 8, comprenant en outre l'activation d'une surface métallique de la grille de connexion (12) avant application du matériau adhésif (20).
